# EUROPEAN PATENT SPECIFICATION

(11) **EP 2 800 623 B1**
(45) Date of publication and mention of the grant of the patent: **01.02.2017**
(21) Application number: 12812698.4
(22) Date of filing: 14.12.2012
(51) Int. Cl.: B01F 7/16, A47J 43/044

(54) **STAND MIXERS**
STANDMIXER
BATTEURS SUR SOCLE

(30) Priority: 04.01.2012 GB 201200044
(43) Date of publication of application: 12.11.2014
(73) Proprietor: Kenwood Limited, Havant, Hampshire PO9 2NH (GB)
(72) Inventor: DOWNIE, David, Havant Hampshire PO9 2NH (GB); PAUL, Palmer, Havant Hampshire PO9 2NH (GB); VACHER, Daniel, Havant Hampshire PO9 2NH (GB)
(74) Representative: Hector, Annabel Mary
(86) International application number: PCT/GB2012/053136
(87) International publication number: WO 2013/102753

(56) References cited:
- FR-A1- 2 317 567
- GB-A- 2 459 309
- US-A1- 2009 147 618

## Description

This invention relates to stand mixers, by which is meant the kind of motor-driven kitchen machine which is used to mix, or otherwise process, ingredients in a bowl by means of planetary movement of one or more shanked tools which depend into the bowl from a head unit that carries a downwardly-facing drive outlet, powered by the motor, to which the shank, or shanks, of the tool, or tools are fitted. The head unit usually comprises part of a mixer that takes the form of a generally C-shaped casing which provides a pedestal-like base for a mixing bowl and a generally upright support portion supporting the head unit so that it extends overhead of the bowl. Alternatively, however, the head may be cantilevered from a wall or a kitchen unit or the like.

Stand mixers such as the Kenwood Chef kitchen machine are well known and have been well established in use for many years. Over the years, mixers of this kind have been adapted and developed so as to perform an ever broadening range of functions, and many such devices incorporate, for example, a plurality of drive outlets running at different speeds and with differing torque characteristics enabling them to perform a wide spread of operations.

Recently, stand mixer arrangements with a still broader operational capability have been developed to incorporate heating means, enabling ingredients in the bowl to be heated whilst being subjected to the planetary mixing action. The degree of heating is selectable, allowing the ingredients to be completely cooked, partially cooked, or merely warmed, according to user requirements and/or the procedures dictated by individual recipes.

Whether or not heating facilities are provided in any given stand mixer, however, there is a need for the head part of the machine to be movable relative to the remainder of the casing (and in particular relative to the bowl-supporting pedestal) in order to facilitate the insertion and removal of the mixing tools and the bowl.

Typically, this movement of the head part relative to the remainder of the casing comprises a vertical, upswinging arcuate movement of the head part about a horizontal pivot located in the upright part of the stand mixer's casing. The movement is initiated by user-operation of a mechanical latch, which frees the head for such motion, and is usually spring-loaded in order to ensure that the necessary movement is achieved, though the arcuate movement of the head can be motor-driven, or at least motor-assisted. Since the head parts of such machines are relatively heavy, it has been found necessary to provide a relatively strong spring and/or motor drive, in order to overcome inertia and urge the head part upwards.

This arrangement presents difficulties, however, as it requires significant amount of headroom above the stand mixer, and sufficient headroom is not always available if, as is common practice, the stand mixer is used on a worktop beneath overhanging cupboard units. In these circumstances, the head part of the stand mixer can strike the overhead units before it reaches the full extent of its upward swing. Since the head part is relatively heavy and moves upwards rapidly under the influence of the aforementioned strong spring and/or drive, it can be stopped abruptly if it hits an overhead unit. Such an impact can result in the transmission of significant force to the remainder of the casing, thereby jolting the machine and possibly causing spillage of ingredients from the mixing bowl, or even displacement of the machine relative to the work-top or other surface on which it is being used.

In order to avoid such impacts, some users drag the stand mixer towards the front edge of the work-top, so that the head part clears the overhead units by rising in front of them, but this is a potentially dangerous practice, as the user may accidentally knock the stand mixer off of the work-top.

GB-A-2 459 309 discloses a stand mixer in accordance with the preamble of claim 1. FR2317567 shows a mixer which allows angular displacement of the output shaft.

The invention aims to address such difficulties and according to the invention there is provided a stand mixer comprising a head unit capable of supporting one or more tools suspended therefrom, support means for supporting said head unit above a receiving location for a mixing bowl such that the said one or more tools depend into said bowl location, and means including an electric motor and associated transmission means for imparting, by way of the head unit, planetary motion to said one or more tools, the mixer being characterised in that said head unit comprises a first part containing drive outlet means for said one or more tools and a second part linking said first part to said support means; the first and second parts having a common axis disposed substantially horizontally in use, and by means whereby the first part of said head unit may be rotated, relative to the said second part, about said axis to raise said one or more tools away from said bowl location. When the tool or tools are in the raised position, they can be readily withdrawn from said drive outlet means for cleaning or replacement with alternative tools.

Preferably, the stand mixer further comprises a bowl-supporting pedestal, and the support means comprises an upright section linking the pedestal and the head unit, such that the head unit is disposed above the pedestal.

Preferably, the head unit as a whole can be also moved arcuately, about a second axis substantially orthogonal to the first-mentioned axis, thereby permitting a processing bowl to more readily be removed from or placed on the pedestal. The second axis preferably extends along said upright section and a pivoting mechanism is preferably provided within said upright section to accommodate the arcuate movement.

In a particularly preferred embodiment of the invention, the stand mixer further comprises linking means for linking said arcuate movement to said rotational movement, whereby the rotational movement automatically occurs when the arcuate movement is performed manually by a user.

The electric motor of the stand mixer may be provided either in said upright section or in said head unit.

The transmission means may be configured such as to permit said relative rotation between the first and second parts of the head unit to occur by means of free-running mechanical couplings.

In some preferred embodiments, the first part of the head unit is axially movable relative to the second part; the axial movement being sufficient to disconnect a mechanical coupling forming part of said transmission means; thereby to permit said rotation to occur without the need to rotate elements in the transmission or the motor drive.

In some preferred embodiments of the invention, the pedestal is provided with a bowl-receiving arrangement capable of accepting a bowl introduced axially thereto.

In order that the invention may be clearly understood and readily carried into effect, one embodiment thereof will now be described, by way of example only, with reference to the accompanying drawings, of which:
Figure 1 shows, in perspective view, a stand mixer in accordance with a first embodiment of the invention;
Figure 2 shows a frontal view of the mixer shown in Figure 1;

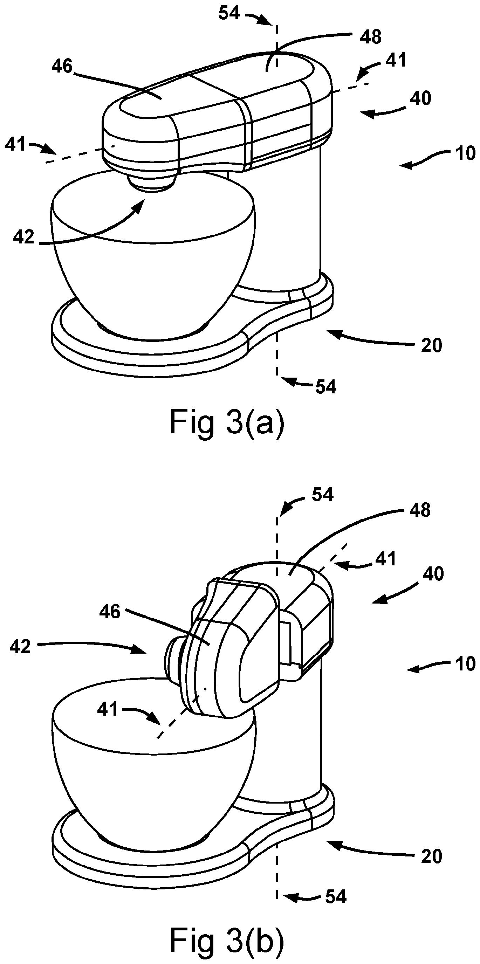

Figure 3(a) shows, in perspective view, a mixer in accordance with a second embodiment of the invention, with its head in an operating position over a bowl;
Figure 3(b) shows the mixer of Figure 3(a) with its head in a raised position relative to the bowl; and

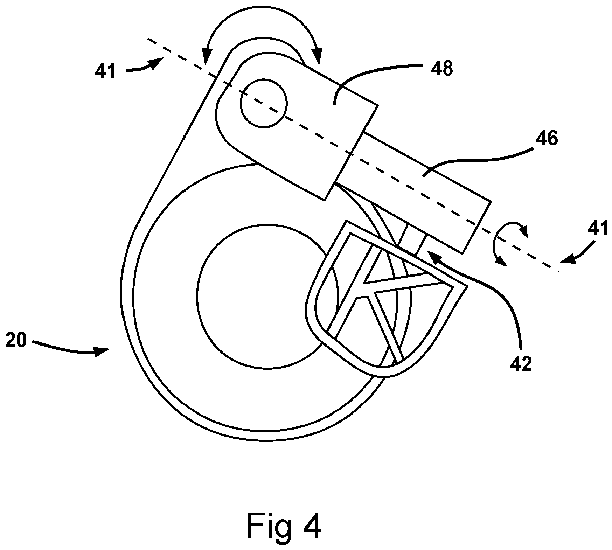

Figure 4 shows, in schematic plan view, the mixer with its head in a raised and swivelled position relative to the bowl.

Referring now to the drawings, a stand mixer 10 comprises a generally C-shaped appliance, comprising a base part 20, which includes a pedestal 30 for locating and supporting in an operational position a processing bowl to contain ingredients for processing. The stand mixer 10 also includes a head part 40 which is supported and linked to the base part 20 by a generally upright portion 50. The stand mixer 10 further contains an electric drive motor (which is not shown, but is usually located either in the generally upright portion 50 or in the head part 40) and transmission means including gearing (not shown) which conveys the motive power supplied by the motor to a drive outlet 42 to which shanked tools can be attached to perform various culinary tasks, such as mixing, kneading etc.

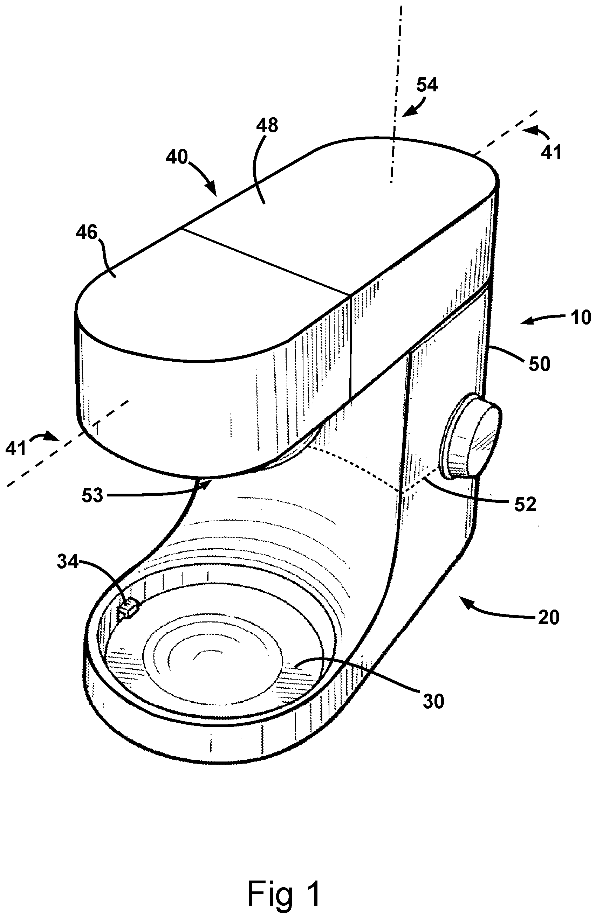

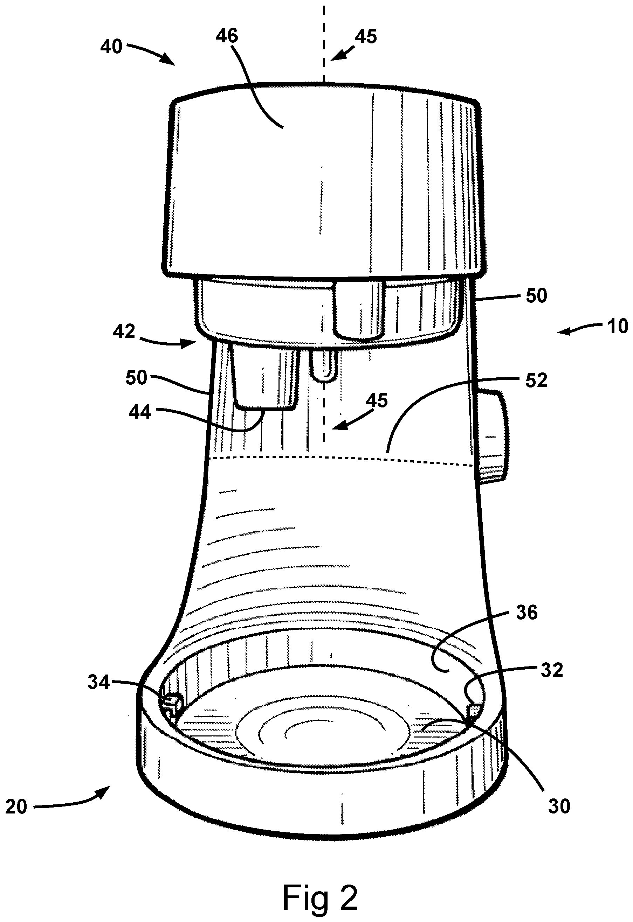

In this particular example, the drive outlet 42 is configured to impart a planetary drive to one or more shanked tools temporarily attached to the outlet and intended for food mixing and/or kneading. The drive outlet 42 is disposed in operation overhead of the pedestal 30, such that the tool or tools driven therefrom depend downwardly from the outlet into the processing bowl (not shown in Figures 1 or 2). It will be appreciated that, in accordance with standard practice, the head part 40 may be configured with further drive outlets providing drive speeds and characteristics suitable for a high-speed blender drive and/or a slow-speed mincer drive for example.

A shanked mixing tool, attached as is conventional, to a socket 44 of the drive outlet 42, will depend in use into a processing bowl placed on the pedestal 30, and is configured to rotate about both the axis of the socket 44 and the central axis 45 of the outlet 42, thus performing a planetary mixing action. The necessary relationships between the relative shapes and dimensions of the bowl and the mixing tool to ensure thorough and repeatable mixing of ingredients are well known and established in use over many years.

As shown, the stand mixer 10 is, in this example, provided with a pair of latches 32, 34 extending from a peripheral wall 36 of the pedestal 30, which latches co-operate with components on the base of the bowl to form a bayonet latching system which ensures firm and ready location of the bowl on its platform. Other latching systems, such as screw-threading for example, can be used as an alternative to bayonet latching if preferred.

In a conventional arrangement, the generally upright casing portion 50 of the stand mixer 10 is configured with a break line, shown dashed at 52, and a suitable mechanism to permit the head part 40 of the stand mixer to be hinged upwardly, away from the pedestal 30, in order to facilitate the insertion and removal of the mixing tools and the bowl. A principal objective of the present invention is to do away with the standard method of raising the head and removing the tool from the mixing bowl.

It will be appreciated that the head part 40 of the stand mixer 10, though not strictly tubular, is generally elongate and can be regarded as having an axis, shown by the dashed line 41 extending through its centre, and that the axis 41 is disposed generally horizontally when the stand mixer is ready for use.

The head part is, in this embodiment of the invention, comprised of a first part 46 supporting the drive outlet 42 and a second part 48 which links to it and to the upright portion 50. The first and second parts share the common axis 41 and, in accordance with this example of the invention, the first part 46 of the head unit may be rotated, relative to the said second part 48, through (in this example) 90 degrees about the axis 41 to turn the drive outlet 42, and any tools attached thereto, away from the generally vertically disposed operational position, and into a generally horizontal orientation. With the first part 46 of the head so rotated, the tool or tools can be readily withdrawn from the drive outlet 42 for cleaning or replacement with alternative tools.

The rotation of the drive outlet 42 from its downward-facing (operational) position to the raised position also facilitates the removal of the processing bowl from, or its placement upon, the pedestal 30. In this connection, instead of utilising a standard rotational bayonet- or screw-based coupling between the base of the processing bowl and the pedestal 30, a linear coupling can be used, if desired, allowing the bowl to be presented axially towards the pedestal 30 from the front and slid thereupon for latching by any convenient means.

The relative rotation of the parts 46 and 48 can be accommodated by any convenient mechanism or means. For example, the transmission mechanism between the electrical drive motor and the drive outlet 42 may be designed to accommodate the necessary degree of relative rotation by free running, without disconnection of any part of the mechanism. Alternatively, the part 46 may be first linearly movable along the axis 41 away from part 48, thereby to temporarily separate two components of the transmission, before the rotation is effected. The axial movement may be spring-assisted, and may require the actuation of a latching button or catch.

In preferred embodiments of the invention, however, the head unit 40 can additionally be swung arcuately through an angle of about 30 degrees about a vertical axis 54 through the upright section 50, thereby further facilitating the removal and placement of the bowl on the pedestal 20.

In a particularly preferred embodiment of the invention, the aforementioned rotation about the horizontal axis 41 and the arcuate movement about the vertical axis 54 are linked such that the user, having actuated a latch device, simply pushes the head unit 40 to one side or the other of the bowl, so as to manually perform the arcuate movement of about 30 degrees about axis 54, and the internal linkage causes the head unit 40 to simultaneously rotate through 90 degrees about the horizontal axis 41. The internal linkage is thus, in this example, configured to have a gearing ratio of 3:1, though it will be appreciated that other ratios can be used, depending on operational parameters and features such as the relative designs of the tools and the processing bowl, which can in part determine how much arcuate movement, if any, is required. Furthermore, the movements about axis 41 and/or 54 may optionally be motor-driven, or motor-assisted, and the motor used for such drive or assistance may be a dedicated motor or may comprise the motor used to drive the tools by way of the head 40.

In any event, it is preferred to provide an interlocking safety cut-out arrangement which disables the motor when the part 46 is rotated into the raised (non-operational) position, thereby to avoid the risk of injury if a user should actuate the motor with tools inserted into the drive outlet 42 and the part 46 rotated away from its operational position. Such a cut-out can be provided in any convenient manner, employing position sensors such as magnets or mobile actuators operating switches.

It will be appreciated that use of the invention reduces the headroom required by the stand mixer 10, allowing it to be operated on a work surface under low cupboards. Further advantageously, the rotation of the tool-carrying drive outlet 42 about the axis 41 allows a user to view the drive outlet 42 directly. This facilitates fitment of tools to, and removal of tools from, the drive socket 44.

## Claims

1. A stand mixer (10) comprising a head unit (40) capable of supporting one or more tools suspended therefrom, support means (50) for supporting said head unit (40) above a receiving location (30) for a mixing bowl such that the said one or more tools depend toward said bowl location (30), and means including an electric motor and associated transmission means for imparting, by way of the head unit (40), planetary motion to said one or more tools, the mixer (10) being **characterised in that** said head unit (40) comprises a first part (46) containing drive outlet means (42) for said one or more tools and a second part (48) linking said first part (46) to said support means (30, 50); the first and second parts (46, 48) having a common axis (41) disposed substantially horizontally in use, and by means whereby the first part (46) of said head unit (40) may be rotated, relative to the said second part (48), about said axis (41) to raise said one or more tools away from said bowl location (30).

2. A stand mixer according to claim 1 further comprising a bowl-supporting pedestal (30) defining said bowl-receiving location, and wherein the support means comprises an upright section (50) linking the pedestal (30) and the head unit (40), such that the head unit (40) is disposed above the pedestal (30).

3. A stand mixer according to claim 2, further comprising means adapted to move the head unit (40) as a whole arcuately, about a second axis (54) substantially orthogonal to the first-mentioned axis (41), thereby permitting a processing bowl to more readily be removed from or placed on the pedestal (30).

4. A stand mixer according to claim 3, wherein the second axis (54) extends along said upright section (50) and a pivoting mechanism is provided within said upright section (50) to accommodate said arcuate movement.

5. A stand mixer according to claim 3 or claim 4, further comprising linking means for linking said arcuate movement to said rotational movement, whereby the rotational movement automatically occurs when the arcuate movement is performed manually by a user.

6. A stand mixer according to any of claims 2 to 5, wherein the electric motor is provided in said upright section (50).

7. A stand mixer according to any of claims 1 to 6, wherein the electric motor is provided in said head unit (40).

8. A stand mixer according to any preceding claim, wherein the transmission means is adapted to permit said relative rotation between the first and second parts (46, 48) of the head unit (40) to occur by means of free-running mechanical couplings.

9. A stand mixer according to any of claims 1 to 7, wherein the first part (46) of the head unit (40) is axially movable relative to the second part (48); the axial movement being sufficient to temporarily separate a mechanical coupling forming part of said transmission means; thereby to permit said rotation to occur without the need to rotate elements in the transmission or the motor drive.

10. A stand mixer according to claim 9, wherein said axial movement is spring-assisted.

11. A stand mixer according to any preceding claim, further comprising a safety cut-out adapted to disable the operation of said motor when the first part (46) is rotated relative to the second part (48), to raise said one or more tools away from said bowl-receiving location (30).

12. A stand mixer according to any preceding claim, wherein the bowl-receiving location (30) comprises a bowl-receiving arrangement capable of accepting a bowl introduced axially thereto.

## Patentansprüche

1. Standmixer (10), der eine Kopfeinheit (40) umfasst, die ein oder mehrere davon herabhängende Werkzeuge tragen kann, Tragmittel (50) zum Tragen der genannten Kopfeinheit (40) über einem Aufnahmeort (30) für eine Rührschüssel, so dass die genannten ein oder mehreren Werkzeuge in Richtung des genannten Schüsselorts (30) herabhängen, und einen Elektromotor mit assoziiertem Getriebe beinhaltende Mittel, um die genannten ein oder mehreren Werkzeuge über die Kopfeinheit (40) in eine Planetenbewegung zu versetzen, wobei der Mixer (10) **dadurch gekennzeichnet ist, dass** die genannte Kopfeinheit (40) einen ersten Teil (46) umfasst, der Antriebsausgangsmittel (42) für die genannten ein oder mehreren Werkzeuge enthält, und einen zweiten Teil (48), der den genannten ersten Teil (46) mit dem genannten Tragmittel (30, 50) verbindet; wobei der erste und der zweite Teil (46, 48) eine gemeinsame Achse (41) haben, die beim Gebrauch im Wesentlichen horizontal angeordnet ist, und durch Mittel, mit denen der erste Teil (46) der genannten Kopfeinheit (40) relativ zu dem genannten zweiten Teil (48) um die genannte Achse (41) gedreht werden kann, um die genannten ein oder mehreren Werkzeuge von dem genannten Schüsselort (30) weg zu heben.

2. Standmixer nach Anspruch 1, der ferner einen Schüsseltragsockel (30) umfasst, der den genannten Schüsselaufnahmeort definiert, und wobei das Tragmittel eine aufrechte Sektion (50) umfasst, die den Sockel (30) und die Kopfeinheit (40) verbindet, so dass die Kopfeinheit (40) über dem Sockel (30) angeordnet ist.

3. Standmixer nach Anspruch 2, der ferner Mittel umfasst, ausgelegt zum bogenförmigen Bewegen der gesamten Kopfeinheit (40) um eine zweite Achse (54) im Wesentlichen orthogonal zur ersterwähnten Achse (41), um es dadurch zuzulassen, dass eine Arbeitsschüssel leichter von dem Sockel (30) genommen oder darauf gestellt werden kann.

4. Standmixer nach Anspruch 3, wobei die zweite Achse (54) entlang der genannten aufrechten Sektion (50) verläuft und ein Schwenkmechanismus in der genannten aufrechten Sektion (50) zum Aufnehmen der genannten bogenförmigen Bewegung vorgesehen ist.

5. Standmixer nach Anspruch 3 oder Anspruch 4, der ferner Verbindungsmittel zum Verbinden der genannten bogenförmigen Bewegung mit der genannten Drehbewegung umfasst, so dass die Drehbewegung automatisch dann auftritt, wenn die bogenförmige Bewegung manuell von einem Benutzer durchgeführt wird.

6. Standmixer nach einem der Ansprüche 2 bis 5, wobei der Elektromotor in der genannten aufrechten Sektion (50) vorgesehen ist.

7. Standmixer nach einem der Ansprüche 1 bis 6, wobei der Elektromotor in der genannten Kopfeinheit (40) vorgesehen ist.

8. Standmixer nach einem vorherigen Anspruch, wobei das Übertragungsmittel zum Zulassen der genannten relativen Drehung zwischen dem ersten und zweiten Teil (46, 48) der Kopfeinheit (40) mittels freilaufender mechanischer Kupplungen ausgelegt ist.

9. Standmixer nach einem der Ansprüche 1 bis 7, wobei der erste Teil (46) der Kopfeinheit (40) relativ zum zweiten Teil (48) axial beweglich ist; wobei die axiale Bewegung ausreicht, um eine mechanische Kopplung, die Teil des genannten Übertragungsmittel bildet, vorübergehend zu trennen, um es zuzulassen, dass die genannte Drehung ohne Notwendigkeit zum Drehen von Elementen in dem Getriebe oder dem Motorantrieb erfolgt.

10. Standmixer nach Anspruch 9, wobei die genannte axiale Bewegung federunterstützt ist.

11. Standmixer nach einem vorherigen Anspruch, der ferner einen Sicherheitsausschnitt umfasst, ausgelegt zum Sperren des Betriebs des genannten Motors, wenn der erste Teil (46) relativ zum zweiten Teil (48) gedreht wird, um die genannten ein oder mehreren Werkzeuge von dem genannten Schüsselaufnahmeort (30) weg zu heben.

12. Standmixer nach einem vorherigen Anspruch, wobei der Schüsselaufnahmeort (30) eine Schüsselaufnahmeanordnung umfasst, die einen axial darin eingeführte Schüssel akzeptieren kann.

## Revendications

1. Robot pâtissier sur socle (10) comprenant une tête (40) prévue pour supporter un ou plusieurs outils suspendus à celle-ci, un moyen (50) de constituer un support pour supporter ladite tête (40) au-dessus d'un emplacement de réception (30) destiné à un bol à mélanger tel que lesdits un ou plusieurs outils pendent dirigés vers ledit emplacement de bol (30), et un moyen comprenant un moteur électrique et un moyen de transmission associé pour appliquer, à l'aide de la tête (40), un mouvement planétaire auxdits un ou plusieurs outils, le robot pâtissier (10) étant **caractérisé en ce que** ladite tête (40) comprend une première partie (46) contenant un moyen de constituer une sortie d'entraînement (42) pour lesdits un ou plusieurs outils et une deuxième partie (48) reliant ladite première partie (46) audit moyen de constituer un support (30, 50); les première et deuxième parties (46, 48) ayant un axe commun (41) placé globalement horizontalement pendant l'utilisation, et par le biais duquel la première partie (46) de ladite tête (40) peut subir une rotation, relativement à ladite deuxième partie (48), autour dudit axe (41) pour relever lesdits un ou plusieurs outils en les éloignant dudit emplacement de bol (30).

2. Robot pâtissier sur socle selon la revendication 1, comprenant en outre un socle de support de bol (30) définissant ledit emplacement de réception de bol, et dans lequel le moyen de constituer un support comprend une section verticale (50) reliant le socle (30) et la tête (40), de telle manière que la tête (40) se trouve au-dessus du socle (30).

3. Robot pâtissier sur socle selon la revendication 2, comprenant en outre un moyen adapté de déplacer la tête (40) dans sa totalité avec précision, autour d'un deuxième axe (54) globalement orthogonal à l'axe mentionné en premier (41), permettant ainsi à un bol de préparation d'être enlevé du socle (30) ou placé dessus plus facilement.

4. Robot pâtissier sur socle selon la revendication 3, dans lequel le deuxième axe (54) se prolonge le long de ladite section verticale (50) et un mécanisme pivotant est fourni dans ladite section verticale (50) pour permettre ledit déplacement avec précision.

5. Robot pâtissier sur socle selon la revendication 3 ou la revendication 4, comprenant en outre un moyen de relier pour relier ledit déplacement avec précision audit mouvement de rotation, de manière à ce que le mouvement de rotation s'effectue automatiquement quand le déplacement avec précision est effectué par un utilisateur.

6. Robot pâtissier sur socle selon l'une quelconque des revendications 2 à 5, dans lequel le moteur électrique est fourni dans ladite section verticale (50).

7. Robot pâtissier sur socle selon l'une quelconque des revendications 1 à 6, dans lequel le moteur électrique est fourni dans ladite tête (40).

8. Robot pâtissier sur socle selon l'une quelconque des revendications précédentes, dans lequel le moyen de transmission est adapté pour permettre à ladite rotation relative entre les première et deuxième parties (46, 48) de la tête (40) de se produire par le biais de raccords mécaniques à ajustement avec jeu moyen.

9. Robot pâtissier sur socle selon l'une quelconque des revendications 1 à 7, dans lequel la première partie (46) de la tête (40) est axialement mobile par rapport à la deuxième partie (48), le mouvement axial étant suffisant pour séparer temporairement un raccord mécanique constituant une partie dudit moyen de transmission, pour permettre ainsi à ladite rotation de se produire sans qu'il soit nécessaire de faire tourner les éléments dans la transmission ou l'entraînement du moteur.

10. Robot pâtissier sur socle selon la revendication 9, dans lequel ledit mouvement axial se produit grâce à un ressort.

11. Robot pâtissier sur socle selon l'une quelconque des revendications précédentes, comprenant en outre un dispositif de coupure de sécurité adapté pour désactiver le fonctionnement dudit moteur quand la première partie (46) est en rotation relative par rapport à la deuxième partie (48), pour relever lesdits un ou plusieurs outils en les éloignant dudit emplacement de réception de bol (30).

12. Robot pâtissier sur socle selon l'une quelconque des revendications précédentes, dans lequel l'emplacement de réception de bol (30) comprend un arrangement de réception de bol capable d'accepter un bol introduit dedans de manière axiale.
